# EUROPEAN PATENT APPLICATION

(11) **EP 3 886 023 A1**
(43) Date of publication of application: **29.09.2021**
(21) Application number: 21164093.3
(22) Date of filing: 22.03.2021
(51) Int. Cl.: G06Q 20/32, G06Q 20/40, G06Q 30/06

(54) **ELECTRONIC DEVICE CONTROL**

(30) Priority: 24.03.2020 GB 202004223
(71) Applicant: Bubbles Online Services Ltd, Alton, Hampshire GU34 1AW (GB)
(72) Inventor: FISHER, Julian, Alton, Hampshire GU34 1AW (GB)
(74) Representative: Swindell & Pearson Limited

(57) **Abstract**

A method of controlling an electronic device, the method comprising: receiving one or more signals from a card associated with a vendor; determining if one or more items, products and/or services of the vendor have been selected on the electronic device for purchase; if it is determined that no items, products and/or services of the vendor have been selected on the electronic device for purchase, controlling the electronic device, in response to receiving the one or more signals, to display information to enable selection of one or more items, products and/or services of the vendor for purchase; and if it is determined that one or more items, products and/or services of the vendor have been selected on the electronic device for purchase, controlling the electronic device, in response to receiving the one or more signals, to initiate payment for the selected one or more items, products and/or services of the vendor.

## Description

### TECHNOLOGICAL FIELD

Embodiments of the present disclosure relate to electronic device control. In particular, embodiments of the present disclosure relate to electronic device control based, at least in part, on received near field communication (NFC) signals.

### BACKGROUND

Use of near field communication (NFC) can be a simple and efficient way to control operation of a user device. For example, a device can be controlled to perform one or more actions in response to receiving NFC signals.

However, ensuring that control of the electronic device, in such circumstances, remains secure and safe can be difficult.

### BRIEF SUMMARY

According to various, but not necessarily all, embodiments there is provided a method, an apparatus and a computer program according to the appended claims.

According to various, but not necessarily all, embodiments there is provided a method of controlling an electronic device, the method comprising:
receiving one or more signals from a card associated with a vendor;
determining if one or more items, products and/or services of the vendor have been selected on the electronic device for purchase;
if it is determined that no items, products and/or services of the vendor have been selected on the electronic device for purchase, controlling the electronic device, in response to receiving the one or more signals, to display information to enable selection of one or more items, products and/or services of the vendor for purchase; and
if it is determined that one or more items, products and/or services of the vendor have been selected on the electronic device for purchase, controlling the electronic device, in response to receiving the one or more signals, to initiate payment for the selected one or more items, products and/or services of the vendor.

In some examples receiving one or more signals from the card associated with the vendor comprises receiving one or more electromagnetic signals comprising information from a near field communication chip of the card associated with the vendor.

In some examples receiving one or more signals from the card associated with the vendor comprises imaging at least a portion of the card associated with the vendor.

In some examples receiving one or more signals from the card associated with the vendor comprises imaging an encoded image on the card associated with the vendor.

In some examples the method comprises: receiving one or more further signals from the card associated with the vendor, within a predetermined time period after receiving the one or more signals from the card of the vendor; and preventing any action by the electronic device in response to receiving the one or more further signals from the card associated with the vendor.

In some examples the method comprises:
subsequent to controlling the electronic device, in response to receiving the one or more signals, to display information to enable selection of one or more items, products and/or services of the vendor, receiving selection of one or more items, products and/or services of the vendor for purchase;
receiving one or more further signals from the card associated with the vendor; receiving biometric information of a user of the electronic device;
authenticating the user of the electronic device using, at least, the received biometric information; and
controlling the electronic device, in response to receiving the one or more further signals and authenticating the user, to initiate payment for the selected one or more items, products and/or services of the vendor.

In some examples controlling the electronic device to initiate payment for one or more items, products and/or services of the vendor comprises causing at least a portion of an amount paid for the one or more items, products and/or services to be available to make payments using the card associated with the vendor.

In some examples the method comprises controlling at least one application on the electronic device.

According to various, but not necessarily all, embodiments there is provided an apparatus comprising means for:
receiving one or more signals from a card associated with a vendor;
determining if one or more items, products and/or services of the vendor have been selected on an electronic device for purchase;
if it is determined that no items, products and/or services of the vendor have been selected on the electronic device for purchase, controlling the electronic device, in response to receiving the one or more signals, to display information to enable selection of one or more items, products and/or services of the vendor for purchase; and
if it is determined that one or more items, products and/or services of the vendor have been selected on the electronic device for purchase, controlling the electronic device, in response to receiving the one or more signals, to initiate payment for the selected one or more items, products and/or services of the vendor.

In some examples the means are further configured to receive one or more electromagnetic signals comprising information from a near field communication chip of the card associated with the vendor.

In some examples the means are further configured to image at least a portion of the card associated with the vendor.

In some examples the means are further configured to image an encoded image on the card associated with the vendor.

In some examples the means are further configured to:
receive one or more further signals from the card associated with the vendor, within a predetermined time period after receiving the one or more signals from the card of the vendor; and to prevent any action by the electronic device in response to receiving the one or more further signals from the card associated with the vendor.

In some examples the means are further configured to:
subsequent to controlling the electronic device, in response to receiving the one or more signals, to display information to enable selection of one or more items, products and/or services of the vendor, receive selection of one or more items, products and/or services of the vendor for purchase;
receive one or more further signals from the card associated with the vendor; receive biometric information of a user of the electronic device;
authenticate the user of the electronic device using, at least, the received biometric information; and
control the electronic device, in response to receiving the one or more further signals and authenticating the user, to initiate payment for the selected one or more items, products and/or services of the vendor.

In some examples the means are further configured to cause at least a portion of an amount paid for the one or more items, products and/or services to be available to make payments using the card associated with the vendor.

In some examples the means are further configured to control at least one application on the electronic device.

According to various, but not necessarily all, embodiments there is provided a computer program that, when run on a computer, performs, at least, the method of one or more preceding paragraph and/or one or more methods as described herein.

According to various, but not necessarily all, embodiments there is provided a non-transitory computer readable medium comprising the computer program.

According to various, but not necessarily all, embodiments there is provided an electronic device comprising an apparatus as described in any preceding paragraph and/or as described herein.

According to various, but not necessarily all, embodiments there is provided a system comprising an apparatus as described in any preceding paragraph and/or as described herein and/or an electronic device as described in any preceding paragraph and/or as described herein and at least one card associated with a vendor.

In some examples the at least one card associated with a vendor comprises a near field communication chip configured to communicate with the apparatus and/or an electronic device and a further near field communication chip configured to be used for contactless credit and/or debit transactions.

### BRIEF DESCRIPTION

Some examples will now be described with reference to the accompanying drawings in which:
- FIG. 1: shows an example of an apparatus;
- FIG. 2: shows an example of an electronic device;
- FIG. 3: shows an example of a method;
- FIG. 4: shows an example of a method;
- FIG. 5: shows an example of a method; and
- FIG. 6: shows an example of control of an electronic device.

### DETAILED DESCRIPTION

Examples of the disclosure relate to control of an electronic device 18, such as user equipment. In examples, any suitable electronic device 18 can be controlled such as any suitable personal electronic device of a user. For example, a phone, a smartphone, a tablet device, and/or a laptop and so on. In examples, an electronic device can include a plurality of devices. In some examples the electronic device(s) can be considered electronic apparatus, electronic equipment and so on.

In examples, one or more signals 12, such as one or more electromagnetic signals 22, are received from a card 14 associated with a vendor and the electronic device 18 is controlled based, at least in part, on the received one or more signals 12.

In examples, the electronic device 18 is controlled to facilitate interaction of the user with the electronic device 18 to purchase one or more items, products and/or services 16 from the vendor.

In examples, the inventive method described herein can be implemented via one or more applications 32 installed on a user's electronic device 18. Accordingly, in examples, the method described herein comprises controlling at least one application 32 on the electronic device 18.

At least some of the figures illustrate an apparatus 10 comprising means for: receiving one or more signals 12 from a card 14 associated with a vendor; determining if one or more items, products and/or services 16 of the vendor have been selected on an electronic device 18 for purchase;
if it is determined that no items, products and/or services 16 of the vendor have been selected on the electronic device 18 for purchase, controlling the electronic device 18, in response to receiving the one or more signals 12, to display information 20 to enable selection of one or more items, products and/or services 16 of the vendor for purchase; and
if it is determined that one or more items, products and/or service 16 of the vendor have been selected on the electronic device 18 for purchase, controlling the electronic device 18, in response to receiving the one or more signals 12, to initiate payment for the selected one or more items, products and/or services 16 of the vendor.

This provides for proficient and secure control of an electronic device and/or guided interaction of a user with an electronic device.

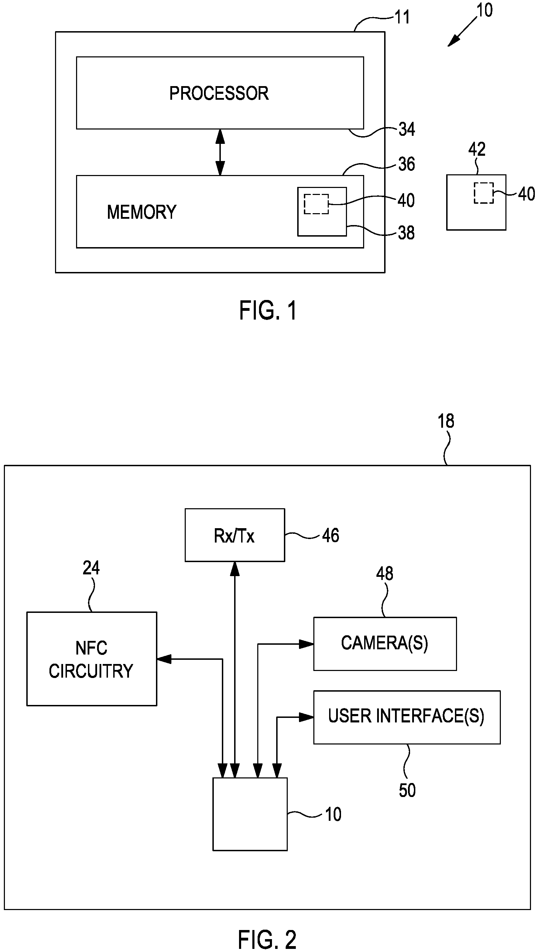

In examples, one or more of the features discussed in relation to FIGs 1 to 3 can be found in one or more of the other figures.

FIG. 1 schematically illustrates an example of an apparatus 10. The apparatus 10 illustrated in the example of FIG. 1 may be a chip or a chipset. In some examples, the apparatus 10 may be provided within electronic device 18, such as within user equipment.

FIG. 1 illustrates an example of a controller 11. Implementation of a controller 11 may be as controller circuitry. The controller 11 may be implemented in hardware alone, have certain aspects in software including firmware alone or can be a combination of hardware and software (including firmware).

As illustrated in FIG. 1 the controller 11 may be implemented using instructions 40 that enable hardware functionality, for example, by using executable instructions 40 of a computer program 38 in a general-purpose or special-purpose processor 34 that may be stored on a computer readable storage medium (disk, memory etc.) to be executed by such a processor 34.

The processor 34 is configured to read from and write to the memory 36. The processor 34 may also comprise an output interface via which data and/or commands are output by the processor 34 and an input interface via which data and/or commands are input to the processor 34.

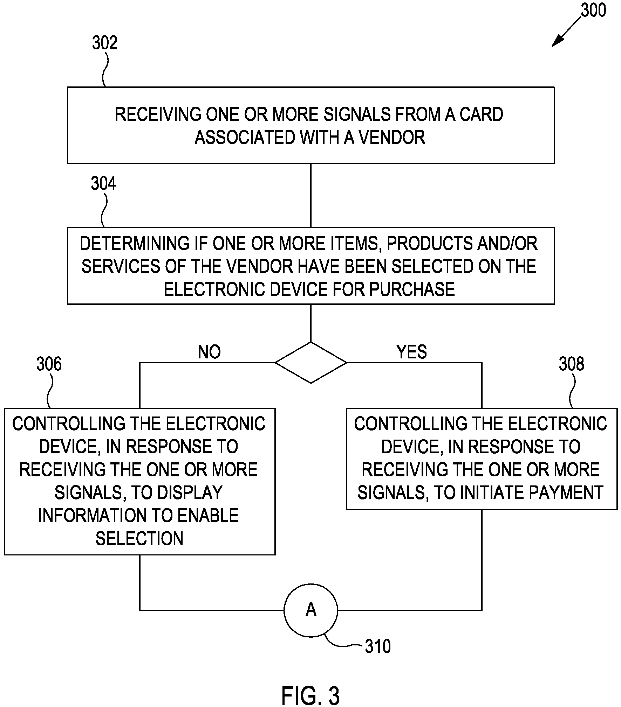

The memory 36 stores a computer program 38 comprising computer program instructions 40 (computer program code) that controls the operation of the apparatus 10 when loaded into the processor 34. The computer program instructions 40, of the computer program 38, provide the logic and routines that enables the apparatus to perform the methods illustrated in FIGs 3, 4 and 5. The processor 34 by reading the memory 36 is able to load and execute the computer program 38.

The apparatus 10 therefore comprises:
at least one processor 34; and
at least one memory 36 including computer program code
the at least one memory 36 and the computer program code configured to, with the at least one processor 34, cause the apparatus 10 at least to perform:
   receiving one or more signals from a card associated with a vendor;
   determining if one or more items, products and/or services of the vendor have been selected on an electronic device for purchase;
   if it is determined that no items, products and/or services of the vendor have been selected on the electronic device for purchase, controlling the electronic device, in response to receiving the one or more signals, to display information to enable
   selection of one or more items, products and/or services of the vendor for purchase; and
   if it is determined that one or more items, products and/or services of the vendor have been selected on the electronic device for purchase, controlling the electronic device, in response to receiving the one or more signals, to initiate payment for the selected one or more items, products and/or services of the vendor.

As illustrated in FIG. 1, the computer program 38 may arrive at the apparatus via any suitable delivery mechanism 42. The delivery mechanism 42 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 38. The delivery mechanism may be a signal configured to reliably transfer the computer program 38. The apparatus 10 may propagate or transmit the computer program 38 as a computer data signal.

Computer program instructions 40 for causing an apparatus to perform at least the following or for performing at least the following:
receiving one or more signals from a card associated with a vendor;
determining if one or more items, products and/or services of the vendor have been selected on an electronic device for purchase;
if it is determined that no items, products and/or services of the vendor have been selected on the electronic device for purchase, controlling the electronic device, in response to receiving the one or more signals, to display information to enable selection of one or more items, products and/or services of the vendor for purchase; and
if it is determined that one or more items, products and/or services of the vendor have been selected on the electronic device for purchase, controlling the electronic device, in response to receiving the one or more signals, to initiate payment for the selected one or more items, products and/or services of the vendor.

The computer program instructions 40 may be comprised in a computer program, a non-transitory computer readable medium, a computer program product, a machine readable medium. In some but not necessarily all examples, the computer program instructions 40 may be distributed over more than one computer program.

Although the memory 36 is illustrated as a single component/circuitry it may be implemented as one or more separate components/circuitry some or all of which may be integrated/removable and/or may provide permanent/semi-permanent/ dynamic/cached storage.

Although the processor 34 is illustrated as a single component/circuitry it may be implemented as one or more separate components/circuitry some or all of which may be integrated/removable. The processor 34 may be a single core or multi-core processor.

The blocks illustrated in the FIGs 3, 4 and 5 may represent steps in a method and/or sections of code in the computer program 38. The illustration of a particular order to the blocks does not necessarily imply that there is a required or preferred order for the blocks and the order and arrangement of the block may be varied. Furthermore, it may be possible for some blocks to be omitted.

FIG. 2 schematically illustrates an example of an electronic device 18. In examples, the electronic device 18 is user equipment.

In the example of FIG. 2, the electronic device 18 comprises near field communication circuitry 24, one or more transceivers 46, one or more cameras 48, one or more user interfaces 15 and an apparatus 10 as described in relation to FIG. 1.

FIG. 2 therefore illustrates an electronic device 18 comprising an apparatus 10 as described herein.

In examples, the electronic device 18 can be/comprise any suitable personal electronic device of a user. For example, the electronic device 18 can be/comprise one or more of a mobile telephone, a smartphone, a tablet device, a laptop, a wearable electronic device, and so on. In examples, the electronic device 18 can comprise a plurality of electronic devices.

In the example of FIG. 2, the apparatus 10 provides means for controlling operation of the electronic device 18. However, in examples, any suitable means for controlling operation of the electronic device 18 can be used.

As illustrated in the example of FIG 2, the elements 24, 46, 48 and 50 are operationally coupled to the apparatus 10 and any number or combination of intervening elements can exist between them (including no intervening elements).

In some examples, one or more of the elements 24, 46, 48 and 50 are operationally coupled to each other and/or share one or more components. Additionally, or alternatively, one or more of the elements 24, 46, 48 and 50 may be operationally coupled to and/or share one or more components with elements not illustrated in the example of FIG. 2.

In examples, the apparatus 10 provides means to control, at least in part, directly or indirectly, operation of the elements 24, 46, 48 and 50. Information may be transmitted between the apparatus 10 and the elements 24, 46, 48 and 50. For example, control information may be transmitted from the apparatus 10 to the elements 24, 46, 48 and 50 and/or information from the elements 24, 46, 48 and 50 transmitted to the apparatus 10.

This is illustrated in the example of FIG. 2 by the double-headed arrows linking the elements 24, 46, 48 and 50 and the apparatus 10.

In examples, any suitable near field communication (NFC) circuitry 24 can be used. That is, in examples, the electronic device 18 can comprise any suitable NFC circuitry 24.

In examples, the NFC circuitry 24 can be considered NFC apparatus, one or more NFC components, one or more NFC devices, and/or one or more NFC chips and so on.

In examples, the NFC circuitry 24 is configured to transmit and/or receive one or more near field signals 12 comprising information. In examples, the NFC circuitry 24 can operate using any suitable NFC communication method.

Near Field Communication (NFC) can be considered to be a standards-based shortrange wireless connectivity technology. It can be considered to be a contact-less communication technology based on a radio frequency (RF) field using a base frequency of 13.56MHz.

In examples, any suitable transceiver(s) 46 can be used. In some examples, one or more separate receivers and/or transmitters can be used.

The one or more transceivers 46 can, in some examples, comprise one or more radio transceivers 46. The one or more transceivers 46 can be configured to transmit and receive radio frequency signals. For example, the one or more radio frequency transceivers 46 can be compatible with one or more shortrange radio protocols, such as Bluetooth or Wi-Fi protocols. Alternatively, or additionally, the one or more radio frequency transceivers 46 can be compatible with one or more longer range protocols, such as one or more cellular telephone protocols.

In examples, the apparatus 10 is configured to control the one or more transceivers 46 to transmit radio frequency signals comprising data. The apparatus 10 is also configured to receive inputs from the one or more transceivers 46 in the form of data/information comprised in received radio frequency signals.

Accordingly, the one or more transceivers 46 can provide means for transmitting and/or receiving one or more signals comprising data or information.

The one or more cameras 48 can comprise any suitable camera and/or imaging device(s).

In examples, the one or more cameras 48 are configured to allow the creation of one or more images which may be considered one or more photographs.

In examples, the electronic device 18 may be configured to present a substantially live view of images produced via the one or more cameras 48 on a display of the electronic device 18. In examples, this can be considered a live view and/or view finder mode. In examples, the one or more cameras 48 can use any suitable imaging technology such as one or more complimentary metal oxide semi-conductor (CMOS) sensors, one or more charge coupled device (CCD) sensors and so on.

In examples, images produced by the one or more cameras 48 can be received by and processed by the apparatus 10.

The one or more user interfaces 50 are configured to receive one or more inputs from a user of the electronic device 18 and/or provide one or more outputs to the user of the electronic device 18.

In examples, any suitable user interface(s) 50 can be used. For example, any suitable user interface(s) 50 configured to allow a user to input information to, for example, control the electronic device 18 and/or output information, in any suitable form, to the user of the electronic device 18 can be used.

In examples, the user interface(s) 50 can comprise one or more of a display, a touch sensitive input (which may be combined with the display), one or more keys, one or more joysticks, one or more speakers, one or more microphones, one or more haptic devices, and so on.

In examples, the electronic device 18 comprises a touch sensitive display configured to provide one or more use actuatable user interface elements to allow a user of the electronic device 18 to control operation of the electronic device 18. In examples, an application 32 of the electronic device 18 can be configured to receive inputs and/or provide outputs from/to the user of the electronic device 18 using the one or more user interfaces 50.

The electronic device 18 can comprise any number of additional elements not illustrated in the example of Fig. 2. Additionally, or alternatively, one or more elements of the electronic device 18 illustrated in the example of FIG. 2 can be integrated and/or combined. For example, the one or more user interfaces 50 and the one or more cameras 48 can be combined. Additionally, or alternatively, the NFC circuitry 24 and the one or more transceivers 46 can be combined.

In some examples, the one or more cameras 48 can be considered to form part of the one or more user interfaces 50.

FIG. 3 illustrates an example of a method 300. The method 300 can be performed by the apparatus 10 of FIG. 1 and/or the electronic device 18 of FIG. 2.

Accordingly, in examples, the apparatus 10 of FIG. 1 and/or the electronic device 18 of FIG.2 provide means for performing the method 300. However, in examples, any suitable means can be used to perform the method 300.

In examples, at least one application 32 on the electronic device 18 can be used in performing the method 300. In examples an application can be considered a program, or group of programs, used by an end user.

Accordingly, in examples, the method 300 comprises controlling at least one application 32 on the electronic device 18.

At block 302, the method 300 comprises receiving one or more signals 12 from a card 14 associated with a vendor.

Any suitable method for receiving one or more signals 12 from a card 14 associated with a vendor can be used.

For example, the NFC circuitry 24, one or more transceivers 46, and/or one or more cameras 48 of the electronic device 18 in FIG. 2 can be used in receiving one or more signals 12 from a card 14 associated with a vendor.

In examples, the card 14 can be considered associated with the vendor because the card 14 is registered to the vendor. Additionally, or alternatively, the card 14 can be considered associated with the vendor because information identifying the vendor is stored and/or recorded on the card 14 in some way. For example, the card 14 can comprise memory storing information identifying the vendor which can be transmitted via one or more signals 12 using, for example, NFC circuitry. Additionally, or alternatively, the card 14 can comprise one or more images which can be used to identify the vendor.

In some examples the card 14 can also be an identity card of the vendor.

In examples, receiving one or more signals 12 from the card 14 associated with the vendor comprises receiving one or more electromagnetic signals 22 comprising information from a near field communication chip 24 of the card 14 associated with the vendor.

That is, in examples, the card 14 of the vendor comprises NFC circuitry 24, which may be in the form of one or more NFC chips.

In examples, the information received from the card 14 can be considered control information as, in examples, the electronic device 18 can be controlled based, at least in part, on the information received from the card 14.

In some examples, receiving one or more signals 22 from the card 14 associated with the vendor comprises imaging at least a portion of the card 14 associated with the vendor.

Any suitable method for imaging at least a portion of the card 14 associated with the vendor can be used. In some examples, the one or more cameras 48 of the electronic device 18 of FIG. 2 can be used to image at least a portion of the card 14 associated with the vendor.

In examples, the one or more cameras 48 of the electronic device 18 can be used to create and/or record one or more images and/or to image the card in a live or view finder mode.

In examples, receiving one or more signals 12 from the card 14 associated with the vendor comprises imaging an encoded image on the card 14 associated with the vendor.

In examples, any suitable encoded image can be used. For example, a barcode or QR code can be used.

In examples, the apparatus 10 can process and/or analyze the image data to determine the encoded information.

In some examples, the card 14 can comprise, for example, at least one image representing the vendor which can be imaged by the electronic device 18 and image processing applied to the image data to recognize the vendor and control the electronic device 18 accordingly.

In examples the at least one image can comprise an image of at least a portion of the vendor, for example the vendor's face.

At block 304, the method 300 comprises determining if one or more items, products and/or services 16 of the vendor have been selected on the electronic device 18 for purchase.

Any suitable method for determining if one or more items, products and/or services 16 of the vendor have been selected on the electronic device 18 for purchase can be used.

For example, the electronic device 18 can determine if one or more items, products and/or services 16 of the vendor have been placed in a basket for purchase on the electronic device 18.

In examples, it can be determined if one or more items, products and/or services 16 of the vendor have been selected based, at least in part, on information received in block 302, such as information identifying the vendor.

As used herein, one or more items, products and/or services 16 of the vendor is intended to include any physical or virtual product or service that a user may purchase from the vendor.

If it is determined that no items, products and/or services 16 of the vendor have been selected on the electronic device 18 for purchase the method 300 proceeds to block 306.

At block 306 the method 300 comprises controlling the electronic device 18 in response to receiving the one or more signals 12, to display information 20 to enable selection of one or more items, products and/or services 16 of the vendor for purchase.

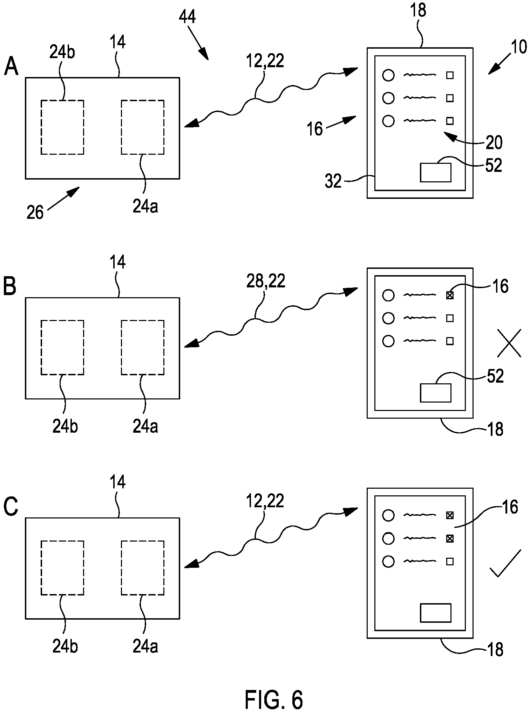

See, for example, FIG 6A.

Any suitable method for controlling the electronic device 18, in response to receiving the one or more signals 12, to display information 20 to enable selection of one or more items, products and/or services 16 of the vendor for purchase can be used.

In examples, an application 32 on the electronic device 18 can be controlled to display one or more items, products and/or services 16 of the vendor that are available for purchase.

Additionally, or alternatively, a browser of the electronic device 18 may be controlled to navigate to a page of the vendor providing information 20 on one or more items, products and/or services 16 of the vendor available for purchase.

In examples, enabling selection of one or more items, products and/or services 16 of the vendor for purchase comprises providing information 20 in relation to the one or more items, products and/or services 16 of the vendor to allow the user of the electronic device 18 to select one or more of the items, products and/or services 16 which can, for example, be placed in a basket for purchase on the electronic device 18.

In some examples, enabling selection of one or more items, products and/or services 20 of the vendor for purchase comprises enabling the user to navigate through information on the electronic device 18.

If it is determined that one or more items, products and/or services 16 of the vendor have been selected on the electronic device 18 for purchase the method 300 proceeds to block 308.

At block 308 the method 300 comprises controlling the electronic device 18, in response to receiving the one or more signals 12, to initiate payment for the selected one or more items, products and/or services 16 of the vendor. See, for example, FIG. 6C.

Any suitable method for controlling the electronic device 18, in response to receiving the one or more signals 12, to initiate payment for the selected one or more items, products and/or services 16 of the vendor can be used.

For example, the one or more transceivers 46 can be controlled to transmit one or more signals comprising information to at least one network to initiate payment for the selected one or more items, products and/or services 16 of the vendor.

In some examples, if payment details are not stored on the electronic device 18, the method 300 comprises prompting the user to enter payment information. For example, the one or more user interfaces 50, such as a display of the electronic device 18, can be used to prompt the user to enter payment information.

In examples, controlling the electronic device 18 to initiate payment for one or more items, products and/or services 16 of the vendor comprises causing at least a portion of an amount paid for the one or more items, products and/or services 16 to be available to make payments using the card 14 associated with the vendor.

Any suitable method for causing at least a portion of an amount paid for the one or more items, products and/or services 16 to be available to make payments using the card 14 associated with the vendor can be used.

In examples, the electronic device 18 can use the one or more transceivers 46 to transmit information to one or more networks to make at least a portion of the amount paid for the one or more items, products and/or services 16 to be available to make payments using the card 14 associated with the vendor.

In examples, the card 14 associated with the vendor comprises NFC circuitry 24, such as one or more NFC chips 24, configured to be used for contactless credit and/or debit transactions using the at least a portion of the amount paid for the one or more items, products and/or services 16.

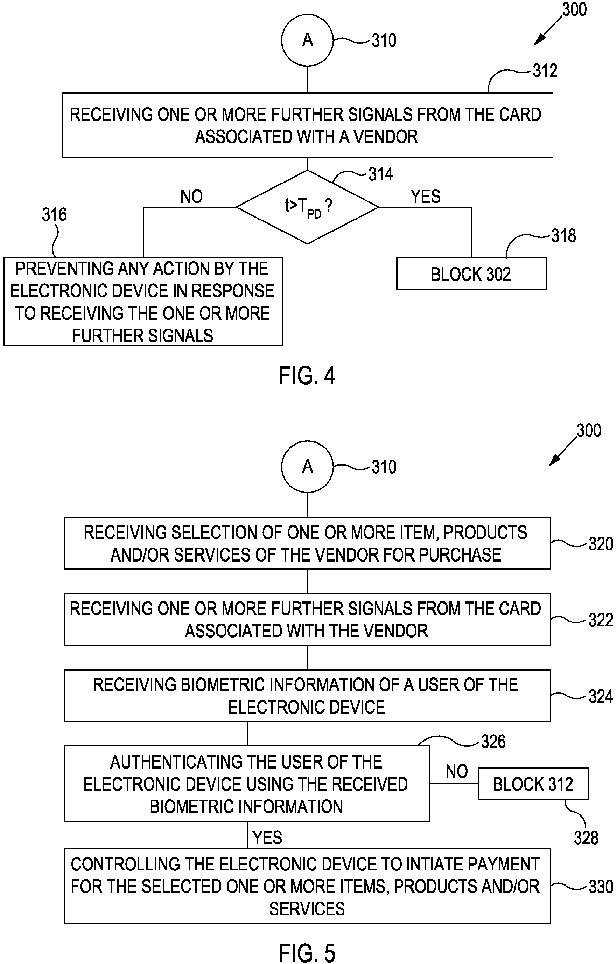

In FIG. 3, after block 306 or 308 the method proceeds to point A 310. See FIGs 4 and 5 for example continuations of method 300.

The method 300 of FIG. 3 advantageous as, for example, it allows a user to either enable selection of items, products and/or services 16 of the vendor or to purchase already selected items, products and/or services 16 of the vendor but prevent, for example, accidental purchase by accidental multiple interactions between the electronic device 18 and a card 14 of the vendor.

A technical effect provided is, therefore, increased security of an electronic device 18 while providing simple and efficient control of an electronic device 18.

FIG. 4 illustrates an example of a method 300. The example of FIG. 4 is a continuation of the method 300 illustrated in FIG. 3.

Accordingly, the method 300 illustrated in FIG. 4 can, in examples, be performed by the apparatus 10 of FIG. 1 and/or the electronic device 18 of FIG. 2.

Block 310 of FIG. 3 is illustrated as the starting point of FIG. 4.

At block 312 the method 300 comprises receiving one or more further signals 28 from the card 14 associated with the vendor.

The further signals 28 and/or receiving the further signals 28 can be as described in relation to the one or more signals 12 of block 302.

In examples, the one or more further signals 28 can be the same as or similar to the one or more signals 12 received at block 302 of the method 300.

At block 314 it is determined if the time (t) elapsed since receiving the one or more signals 12 (block 302) is greater than a predetermined period of time (T_{PD}).

In examples, this determination can be made in suitable way. For example, the electronic device 18 can have a clock and/or timer functionality and can monitor how long has passed since receiving the one or more signals 12 from the card 14 associated with the vendor (block 302).

In examples, any suitable predetermined period of time (T_{PD}) can be used. For example, a time period in the range 30 minutes to 2 hours can be used. In some examples a time period in the range 45 minutes to 90 minutes can be used. In some examples a time period in the range 50 minutes to 70 minutes can be used. In some examples a time period of 60 minutes can be used.

If it is determined at block 314 that the time (t) elapsed is greater than the predetermined period of time (T_{PD}) the method proceeds to block 318 and returns to block 302 of FIG. 3.

However, if it is determined at block 314 that the time (t) elapsed is less than the predetermined period of time (T_{PD}) the method proceeds to block 316.

At block 316, the method comprises preventing any action by the electronic device 18 in response to receiving the one or more further signals 28.

In examples, any suitable method for preventing any action by the electronic device 18 in response to receiving the one or more further signals 28 from the card 14 associated with the vendor can be used.

For example, the apparatus 10 can be configured to filter out and/or ignore one or more further signals 28 received from the card 14 of the vendor within the predetermined time period (T_{PD}).

Accordingly, in examples, the method 300 comprises receiving one or more further signals 28 from the card 14 associated with the vendor, within a predetermined time period (T_{PD}) after receiving the one or more signals 12 from the card 14 of the vendor and preventing any action by the electronic device 18 in response to receiving the one or more further signals 28 from the card 14 associated with the vendor.

This is advantageous as, for example, it further ensures that accidental control of the electronic device 18 in dependence on the signals received from the card 14 of the vendor is avoided.

A technical effect provided is, therefore, increased security of an electronic device while providing simple and efficient control of the electronic device 18.

FIG. 5 illustrates an example of a method 300. The example of FIG. 5 is a continuation of the method 300 illustrated in FIG. 3.

Accordingly, the method 300 of FIG. 5 can be performed by the apparatus 10 of FIG. 1 and/or the electronic device 18 of FIG. 2.

The example of FIG. 5 follows the method 300 of FIG. 3 where the method 300 has proceeded by block 306. That is, where the determination at block 304 is negative.

At block 320, the method 300 comprises receiving selection of one or more items, products and/or services 16 of the vendor for purchase.

Any suitable method for receiving selection of one or more items, products and/or services 16 of the vendor for purchase can be used.

In examples, the one or more user interfaces 50 can be used to allow a user of the electronic device 18 to navigate to and/or select one or more items, products and/or services 16 of the vendor for purchase using an application 32 and/or a browser.

At block 322 the method comprises receiving one or more further signals 28 from the card 14 associated with the vendor.

The further signals 28 and/or receiving the further signals 28 can be as described in relation to the one or more signals 12 of block 302.

In examples, the one or more further signals 28 can be the same as or similar to the one or more signals 12 received at block 302 of the method 300.

At block 324, the method comprises receiving biometric information of a user of the electronic device 18.

Any suitable method for receiving biometric information of a user of the electronic device 18 can be used. For example, the one or more user interfaces 50 and/or one or more cameras 48 of the electronic device 18 can be used.

In examples, any suitable form of biometric information can be used. For example, any form of biometric information that can repeatedly and reliably identify the user of the electronic device 18 can be used. For example, facial recognition, fingerprint recognition, voice recognition, and/or retinal scanning and so on.

At block 326 the method comprises authenticating the user of the electronic device 18 using, at least, the received biometric information.

Any suitable method for authenticating the user of the electronic device 18 using, at least, the received biometric information can be used.

For example, the received biometric information can be checked against stored information in the electronic device 18 and/or the one or more transceivers 46 can be used to transmit and receive one or more signals to enable authentication of the user of the electronic device 18, using, at least, the received biometric information, remote from the electronic device.

If the authentication fails the method 300 proceeds to block 328 and returns to block 312 of FIG. 4.

If, however, the authentication is successful, the method 300 proceeds to block 330.

At block 330, the method comprises controlling the electronic device 18, in response to receiving the one or more further signals 28 and authenticating the user, to initiate payment for the selected one or more items, products and/or services 16 of the vendor. Any suitable method for controlling the electronic device 18, in response to receiving the one or more further signals 28, to initiate payment for the selected one or more items, products and/or services 16 of the vendor can be used.

For example, the one or more transceivers 46 can be controlled to transmit one or more signals comprising information to at least one network to initiate payment for the selected one or more items, products and/or services 16 of the vendor.

In some examples, if payment details are not stored on the electronic device 18, the method 300 comprises prompting the user to enter payment information. For example, the one or more user interfaces 50, such as a display of the electronic device 18, can be used to prompt the user to enter payment information.

Accordingly, in examples, the method 300 comprises subsequent to controlling the electronic device 18, in response to receiving the one or more signals 12, to display information 20 to enable selection of one or more items, products and/or services 16 of the vendor, receiving selection of one or more items, products and/or services 16 of the vendor for purchase; receiving one or more further signals 28 from the card 14 associated with the vendor; receiving biometric information of a user of the electronic device 18; authenticating the user of the electronic device 18 using, at least, the received biometric information; and controlling the electronic device 18, in response to receiving the one or more further signals 28 and authenticating the user, to initiate payment for the selected one or more items, products and/or services 16 of the vendor.

This is advantageous as, for example, it enables easy and efficient control of an electronic device while preventing accidental control, by use of biometric information, to maintain security of an electronic device 18.

FIG. 6 illustrates examples of control of an electronic device 18.

The example of FIG. 6 is split into three parts, A, B and C. Parts A to C of FIG. 6 can be considered FIGs 6A to 6C respectively.

In FIG. 6A the card 14 associated with the vendor and an electronic device 18 are shown.

In examples, the electronic device 18 can be as described in relation to FIG. 2 and therefore FIG. 6 illustrates a system 44 comprising an apparatus 10 as described herein and/or an electronic device 18 as described herein and at least one card 14 associated with the vendor.

In the example of FIG. 6A, the card 14 comprises an NFC chip 24a and a further NFC chip 24b. In examples, the NFC chip 24a is configured to operate as part of the inventive method described herein.

The further NFC chip 24b is configured to be used for contactless credit and/or debit transactions.

Accordingly, in examples, the at least one card 14 associated with the vendor comprises a near field communication chip 24a configured to communicate with the apparatus 10 and/or an electronic device 18 and a further near field communication chip 24b configured to be used for contactless credit and/or debit transactions.

In the example of FIG. 6A, the card 14 associated with the vendor also comprises an encoded image 26 on the reverse of the card 14. In examples, the encoded image 26 and/or the NFC chip 24a can be used in the inventive method described herein.

In the example of FIG. 6A the electronic device 18 has been brought close to the NFC chip 24a of the card 14 to allow one or more signals 12, in the form of one or more electromagnetic signals 22, to be transmitted between the card 14 and the electronic device 18.

As can be seen in the example of FIG. 6A, in response, the electronic device 18 has determined that no items, products and/or services 16 of the vendor have been selected on the electronic device 18 for purchase and therefore the electronic device 18 has been controlled to display information 20 in the form of a list of items, products and/or services 16 of the vendor for selection by the user.

In the example of FIG. 6A an application 32 of the electronic device 18 is controlled to provide the information 20.

A UI element 52 is also provided to initiate payment for any selected items, products and/or services 16.

The example of FIG. 6B follows the example of FIG. 6A.

In the example of FIG. 6B, in response to display of the information 20, the user has selected a product 16 of the vendor for purchase. This is illustrated in the example of FIG. 6B by the check mark in the box corresponding to a product 16 of the vendor.

In the example of FIG. 6B, the electronic device 18 has again been brought near the card 14 to allow one or more signals 28, 22 to be transferred between the NFC chip 24a of the card 14 and the electronic device 18.

However, in the example of FIG. 6B, the predetermined time period (T_{PD}) has not passed and therefore action at the electronic device 18 is prevented in response to receipt of the further signals 28, 22.

Accordingly, in the example of FIG. 6B, the user must actuate the "Pay" user interface element 52 to initiate payment of the selected product 16 of the vendor.

In the example of FIG. 6C, a similar scenario is illustrated.

However, in the example of FIG. 6C the user has navigated in the application 32 to the vendor's page and has already selected two products 16 associated with the vendor for purchase. This is illustrated by the check marks in the boxes in the example of FIG. 6C.

In the example of FIG. 6C the products 16 are already selected when the electronic device 18 is brought near to the card 14 of the vendor for the first time, to allow one or more signals 12, 22 to be transferred between the NFC chip 24a of the card 14 and the electronic device 18.

In response, in the example of FIG. 6C, payment for the selected product 16 is initiated.

Where a structural feature has been described, it may be replaced by means for performing one or more of the functions of the structural feature whether that function or those functions are explicitly or implicitly described.

The recording of data may comprise only temporary recording, or it may comprise only permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example. Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A method of controlling an electronic device, the method comprising:
receiving one or more signals from a card associated with a vendor;
determining if one or more items, products and/or services of the vendor have been selected on the electronic device for purchase;
if it is determined that no items, products and/or services of the vendor have been selected on the electronic device for purchase, controlling the electronic device, in response to receiving the one or more signals, to display information to enable selection of one or more items, products and/or services of the vendor for purchase; and
if it is determined that one or more items, products and/or services of the vendor have been selected on the electronic device for purchase, controlling the electronic device, in response to receiving the one or more signals, to initiate payment for the selected one or more items, products and/or services of the vendor.

2. A method as claimed in claim 1, wherein receiving one or more signals from the card associated with the vendor comprises receiving one or more electromagnetic signals comprising information from a near field communication chip of the card associated with the vendor.

3. A method as claimed in claim 1 or claim 2, wherein receiving one or more signals from the card associated with the vendor comprises imaging at least a portion of the card associated with the vendor.

4. A method as claimed in claim 3, wherein receiving one or more signals from the card associated with the vendor comprises imaging an encoded image on the card associated with the vendor.

5. A method as claimed in any preceding claim, comprising:
receiving one or more further signals from the card associated with the vendor, within a predetermined time period after receiving the one or more signals from the card of the vendor; and preventing any action by the electronic device in response to receiving the one or more further signals from the card associated with the vendor.

6. A method as claimed in any of claims 1 to 4 comprising:
subsequent to controlling the electronic device, in response to receiving the one or more signals, to display information to enable selection of one or more items, products and/or services of the vendor, receiving selection of one or more items, products and/or services of the vendor for purchase;
receiving one or more further signals from the card associated with the vendor;
receiving biometric information of a user of the electronic device;
authenticating the user of the electronic device using, at least, the received biometric information; and
controlling the electronic device, in response to receiving the one or more further signals and authenticating the user, to initiate payment for the selected one or more items, products and/or services of the vendor.

7. A method as claimed in any preceding claim, wherein controlling the electronic device to initiate payment for one or more items, products and/or services of the vendor comprises causing at least a portion of an amount paid for the one or more items, products and/or services to be available to make payments using the card associated with the vendor.

8. A method as claimed in any preceding claim, wherein the method comprises controlling at least one application on the electronic device.

9. An apparatus comprising means for performing, at least, the method of one or more of claims 1 to 8.

10. A computer program that, when run on a computer, performs, at least, the method of one or more of claims 1 to 8.

11. A non-transitory computer readable medium comprising the computer program of claim 10.

12. An electronic device comprising an apparatus as claimed in claim 9.

13. A system comprising an apparatus as claimed in claim 9 and/or an electronic device as claimed in claim 12 and at least one card associated with a vendor.

14. A system as claimed in claim 13, wherein the at least one card associated with a vendor comprises a near field communication chip configured to communicate with the apparatus and/or an electronic device and a further near field communication chip configured to be used for contactless credit and/or debit transactions.
